# EUROPEAN PATENT APPLICATION

(11) **EP 4 625 524 A1**
(43) Date of publication of application: **01.10.2025**
(21) Application number: 23893993.8
(22) Date of filing: 23.11.2023
(51) Int. Cl.: H01M 4/134, H01M 4/133, H01M 4/62, H01M 10/0525

(54) **NEGATIVE ELECTRODE SHEET, LITHIUM BATTERY, AND ELECTRIC DEVICE**

(30) Priority: 23.11.2022 CN 202211474567
(71) Applicant: BYD Company Limited, Shenzhen, Guangdong 518118 (CN)
(72) Inventor: XI, Lihua, Shenzhen, Guangdong 518118 (CN); WU, Chuchu, Shenzhen, Guangdong 518118 (CN); HU, Jing, Shenzhen, Guangdong 518118 (CN); WANG, Liangjun, Shenzhen, Guangdong 518118 (CN); HE, Kefeng, Shenzhen, Guangdong 518118 (CN)
(74) Representative: Mathys & Squire
(86) International application number: PCT/CN2023/133783
(87) International publication number: WO 2024/109904

(57) **Abstract**

A negative electrode sheet, including a negative electrode current collector as well as a capacity providing layer, a conductive bonding layer, and a fast ion conductor layer which are sequentially stacked on at least one side surface of the negative electrode current collector, where the capacity providing layer comprises a first negative electrode active material, a first binder, and a first conductive agent, the fast ion conductor layer comprises a carbon active material, a lithium superionic conductor, a second binder, and a second conductive agent, and the specific capacity of the first negative electrode active material is greater than that of the carbon active material. A lithium battery, comprising the negative electrode sheet. An electric device, comprising the lithium battery having the negative electrode sheet.

## Description

### CROSS-REFERENCE TO RELATED APPLICATIONS

The present disclosure claims priority to and benefits of Chinese Patent Application No. 202211474567.3, filed on November 23, 2022 and entitled "NEGATIVE ELECTRODE SHEET, LITHIUM BATTERY, AND ELECTRIC DEVICE". The entire content of the above-referenced application is incorporated herein by reference.

### FIELD

The present disclosure relates to the technical field of lithium-ion batteries, and specifically, to a negative electrode sheet, a lithium battery, and an electric device.

### BACKGROUND

In related technologies, lithium-ion batteries generally use graphite as the negative electrode active material. To meet requirements for increasing energy density of the batteries, the thickness of positive and negative electrodes is continuously increasing. However, this results in deterioration of fast-charging performance of the batteries.

### SUMMARY

In view of this, the present disclosure provides a negative electrode sheet, a lithium battery, and an electric device, to solve the problem that a lithium battery cannot realize both high energy density and good fast-charging performance.

According to a first aspect, the present disclosure provides a negative electrode sheet, including a negative electrode current collector, a capacity providing layer, a fast ion conductor layer, and a conductive bonding layer. The capacity providing layer is stacked on at least one side surface of the negative electrode current collector in a thickness direction, and includes a first negative electrode active material, a first binder, and a first conductive agent. The fast ion conductor layer is stacked on a side surface of the capacity providing layer facing away from the negative electrode current collector. The fast ion conductor layer includes a carbon active material, a lithium superionic conductor, a second binder, and a second conductive agent, and a specific capacity of the first negative electrode active material is greater than a specific capacity of the carbon active material. The conductive bonding layer is arranged between the capacity providing layer and the fast ion conductor layer.

The foregoing structure of the negative electrode sheet ideally utilizes concentration gradient differences of lithium ions at different positions on the negative electrode sheet. The fast ion conductor layer having a strong ion-conducting capability is at the uppermost layer and is close to a separator, to improve lithium-ion transport performance of the entire electrode sheet, and reduce concentration of lithium ions on a surface of the negative electrode during high-current charging, so as to lower a risk of lithium precipitation. The capacity providing layer is under the fast ion conductor layer and is close to the negative electrode current collector, to ensure good dynamic performance of the entire negative electrode sheet, and help to improve fast-charging performance. In addition, the capacity providing layer contains the first negative electrode active material having a higher specific capacity than the carbon active material and is a main capacity providing layer. The presence of the capacity providing layer can ensure that energy density of the battery remains high when the negative electrode sheet is thin. The conductive bonding layer is between the foregoing two layers to stabilize connection of the foregoing two layers, and provide a buffering space for volume expansion of the negative electrode during charging, thereby improving cycling performance of the battery. Therefore, a unique three-layer coating structure is used for the negative electrode sheet, to ensure a super high specific capacity of the negative electrode and fast transport of the lithium ions, thereby improving fast-charging performance and achieving good cycling performance.

According to a second aspect, the present disclosure provides a lithium battery. The lithium battery includes the negative electrode sheet according to the first aspect of the present disclosure.

Due to the use of the foregoing negative electrode sheet, the lithium battery achieves high capacity utilization, high energy density, short charging times, and good cycling performance.

According to a third aspect, the present disclosure provides an electric device. The electric device is provided with the lithium battery according to the second aspect of the present disclosure.

### BRIEF DESCRIPTION OF THE DRAWINGS

FIG. 1 is a schematic diagram of a structure of a negative electrode sheet according to an embodiment of the present disclosure; and
FIG. 2 is a graph of room temperature fast-charging cycling performance of pouch batteries produced using negative electrode sheets in Embodiments 1 to 8 of the present disclosure and pouch batteries produced using negative electrode sheets in Comparative examples 1 to 4.

### DETAILED DESCRIPTION

The following describes the technical solutions in embodiments of the present disclosure with reference to the accompanying drawings.

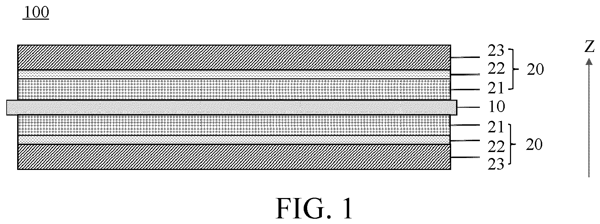

Referring to FIG. 1, an embodiment of the present disclosure provides a negative electrode sheet 100, including a negative electrode current collector 10 as well as a capacity providing layer 21, a conductive bonding layer 22, and a fast ion conductor layer 23 that are sequentially stacked on at least one side surface of the negative electrode current collector 10 in a thickness direction Z. The capacity providing layer 21 includes a first negative electrode active material, a first binder, and a first conductive agent. The fast ion conductor layer 23 includes a carbon active material (that is, a second negative electrode active material), a lithium superionic conductor, a second binder, and a second conductive agent. A specific capacity of the first negative electrode active material is greater than a specific capacity of the carbon active material. Obviously, for the conductive bonding layer 22, it may be understood from the name that the conductive bonding layer includes a conductive agent and a binder (which may be respectively referred to as a third conductive agent and a third binder for clearer description). The thickness direction Z of the negative electrode current collector 10 refers to a stacking direction of the capacity providing layer 21, the conductive bonding layer 22, and the fast ion conductor layer 23, and is parallel to a thickness direction of the negative electrode current collector 10, the capacity providing layer 21, the conductive bonding layer 22, and the fast ion conductor layer 23.

A stacked structure of the capacity providing layer 21, the conductive bonding layer 22, and the fast ion conductor layer 23 forms a negative electrode coating 20 of the negative electrode sheet 100. The fast ion conductor layer 23 is at the uppermost layer away from the negative electrode current collector 10 and is close to a separator. During battery charging, the fast ion conductor layer 23 first receives lithium ions de-intercalated from a positive electrode. Based on the excellent lithium-ion transport capability of the fast ion conductor layer 23 and the established fast lithium-ion channel, lithium ions on a surface of a negative electrode with a highest lithium ion concentration can be conducted away as soon as possible, to reduce any concentration gradient, so as to prevent the lithium ions from being directly reduced to metallic lithium on the surface of the negative electrode when the lithium ions are unable to react promptly with a negative electrode material, and ensure that no lithium is precipitated in an area with a highest lithium-ion concentration, especially during high current fast-charging.

The capacity providing layer 21, which primarily provides capacity, is at the bottom and is close to the negative electrode current collector 10. The capacity providing layer 21 contains the first negative electrode active material having a high specific capacity, so that the battery achieves a high energy density, and the negative electrode sheet 100 can be made thin, thereby shortening the traveling path of the lithium ions and improving rate performance. In addition, because the first negative electrode active material having a high specific capacity generally provides poor dynamic performance, the first negative electrode active material is placed at the bottom of the current collector away from the separator, to better optimize fast-charging performance of the battery. On top of that, if the fast ion conductor layer 23 is not provided, the first negative electrode active material participates in high-current reactions at the beginning, resulting in deterioration of overall dynamic performance of the electrode sheet.

The conductive bonding layer 22 in the middle serves as a connection bond between the capacity providing layer 21 and the fast ion conductor layer 23, to make a combination between upper and lower layers more compact, so as to avoid cracks in an interface between the upper and lower layers and separation of the layers during battery cycling. Moreover, the conductive bonding layer 22 has certain flexibility, and may further function as a volume buffer, to provide some space for volume expansion of upper and lower layers containing the active material during charging and compensate for volume contraction of the upper and lower layers containing the active material during discharging. The conductive bonding layer 22 with certain elasticity can provide a buffering effect for volume expansion of the first negative electrode active material during charging and discharging, especially when the first negative electrode active material contained in the capacity providing layer 21 undergoes significant volume changes during charging and discharging, to reduce a volume change rate of the negative electrode sheet 100 during a charging and discharging cycle and improve cycling performance of the battery.

Therefore, the negative electrode coating on the negative electrode sheet 100 is of a unique three-layer structure, to ensure a super high specific capacity of the negative electrode, improve fast-charging performance of the battery, and achieves good cycling performance of the battery.

The "specific capacity" described in this specification refers to a mass specific capacity, that is, an amount of electricity that can be discharged from a battery or an active substance per unit mass. In addition, the "specific capacity" may specifically mean that a theoretical specific capacity of the first negative electrode active material is greater than that of the carbon active material, or that an actual specific capacity of the first negative electrode active material is greater than that of the carbon active material. A theoretical specific capacity refers to an amount of charge released or absorbed by an active substance (for example, a negative electrode material or a positive electrode material) per unit mass in a battery under a complete reaction condition. The theoretical specific capacity is calculated based on the stoichiometry of a chemical reaction, presuming that all active substances participate in the reaction, and either an actual battery structure or losses and limitations in an operation process are not considered. An actual capacity refers to an actual amount of electricity that a battery or an active substance can output under specific discharging conditions.

In an implementation of the present disclosure, in the thickness direction Z of the negative electrode current collector 10, a thickness ratio of the fast ion conductor layer 23, the conductive bonding layer 22, and the capacity providing layer 21 is (3-5):1:(4-6). Specifically, the thickness ratio may be 3:1:6, 4:1:5, 5:1:4, 3:1:4, 4:1:4, or the like. The conductive bonding layer 22 is the thinnest, and can therefore provide a conductive connection function without negatively impacting a total capacity of the entire negative electrode sheet 100 or an energy density of a battery core due to a lack of electrochemical activity of the conductive bonding layer 22. In addition, a thickness of the conductive bonding layer 22 is not significantly different from that of the capacity providing layer 21, the fast ion conductor layer 23, and the like, so as to ensure that the conductive bonding layer can actually exert a volume buffering effect. The thicknesses of the capacity providing layer 21 and the fast ion conductor layer 23 may be freely adjusted as needed, and may be specifically adjusted based on a required total capacity of the negative electrode and an addition amount of the first negative electrode active material having a high specific capacity.

In some implementations of the present disclosure, the thickness of the capacity providing layer 21 is greater than or equal to the thickness of the fast ion conductor layer 23. In this way, a high energy density of the battery is better ensured.

In an implementation of the present disclosure, on one side of the negative electrode current collector 10, a sum of the thicknesses of the capacity providing layer 21, the conductive bonding layer 22, and the fast ion conductor layer 23 ranges from 60 µm to 100 µm. In other words, a thickness of a negative electrode coating 20 on a single side ranges from 60 µm to 100 µm. A negative electrode coating 20 of a suitable thickness can not only ensure ease of implementation of a coating process, but also prevent adverse effects of an excessive thickness on fast-charging performance of a battery. Specifically, the sum of the foregoing thicknesses may be 60 µm, 65 µm, 70 µm, 75 µm, 80 µm, 85 µm, 90 µm, 95 µm, 100 µm, or the like.

In some implementations, the thickness of the conductive bonding layer 22 may range from 6 µm to 10 µm, for example, 6 µm, 6.5 µm, 7 µm, 7.5 µm, 8 µm, 8.3 µm, 9 µm, 9.5 µm, or 10 µm, and optionally ranges from 6 µm to 8 µm. The thickness of the capacity providing layer 21 may range from 24 µm to 60 µm, for example, 24 µm, 25 µm, 30 µm, 32 µm, 35 µm, 40 µm, 42 µm, 50 µm, 55 µm, or 60 µm. The thickness of the fast ion conductor layer 23 ranges from 18 µm to 50 µm, for example, 18 µm, 20 µm, 24 µm, 25 µm, 28 µm, 30 µm, 35 µm, 40 µm, 45 µm, 48 µm, or 50 µm, and optionally ranges from 18 µm to 30 µm.

In the present disclosure, although the capacity providing layer 21 is a main capacity providing source of the battery, the fast ion conductor layer 23 also contributes to the capacity. In an implementation of the present disclosure, the fast ion conductor layer 23 includes the following components in mass percentage: 70 wt% to 89 wt% of the carbon active material, 4 wt% to 10 wt% of the lithium superionic conductor, 5 wt% to 10 wt% of the second binder, and 6 wt% to 10 wt% of the second conductive agent. In this way, it can be ensured that the fast ion conductor layer 23 plays a role in enhancing a lithium-ion transport capability and also contributing to the capacity to a certain extent, and the coating does not easily peel off. Specifically, content of the carbon active material in mass percentage in the fast ion conductor layer 23 may be 70%, 75%, 80%, 82%, 85%, 88%, 89%, or the like. Content of the lithium superionic conductor in mass percentage in the fast ion conductor layer 23 may be 4%, 5%, 6%, 7%, 8%, 9%, 9.5%, 10%, or the like. Content of the second binder in mass percentage in the fast ion conductor layer 23 may be 5%, 5.5%, 6%, 7%, 8%, 9%, 9.5%, 10%, or the like. Content of the second conductive agent in mass percentage in the fast ion conductor layer 23 may be 6%, 7%, 8%, 9%, 9.5%, 10%, or the like. In some implementations, in the capacity providing layer 21, a mass ratio of the carbon active material, the lithium superionic conductor, the first binder, and the first conductive agent is 8:0.5:0.5:1, 7:1:1:1, or the like.

The lithium superionic conductor includes one of more of Li₃SBF₄, LiAlSiO₄, LiTaSiOs, Li₁₀Si₂PO₁₀, Li₂P₃SiO₈, or the like, but is not limited thereto. These lithium superionic conductor materials have high ionic conductivity. This can improve a capability of the negative electrode sheet 100 to transport lithium ions.

The carbon active material includes one or more of hard carbon, soft carbon, graphite (for example, artificial graphite and natural graphite), mesophase carbon microbead, or the like. The second conductive agent may include one or more of carbon nanotube, graphene, carbon fiber, carbon black (for example, acetylene black, Ketjen black, Supper P, or 350G carbon black), or the like. The carbon nanotube may be specifically a single-walled carbon nanotube or a multi-walled carbon nanotube, and the carbon fiber may be specifically an arrayed carbon fiber. It should be noted that, although the carbon active material and the first conductive agent are both carbon materials herein, a conductive capability of the conductive agent is better than that of the carbon active material, and a lithium intercalation capability may be ignored. However, the carbon active material has an excellent lithium intercalation capability, and may be used as a negative electrode active material.

The second binder may be selected from one or more of styrene-butadiene rubber (SBR), polyacrylate, polyacrylonitrile (PAN), polyacrylic acid (PAA), polyvinyl alcohol (PVA), polyimide (PI) or a modification thereof, sodium carboxymethyl cellulose (CMC), sodium alginate, or the like, but is not limited thereto.

In an implementation of the present disclosure, the conductive bonding layer 22 includes the following components in mass percentage: 10 wt% to 30 wt% of the third binder, and 70 wt% to 90 wt% of the third conductive agent. In this way, it can be ensured that the conductive bonding layer 22 has good adhesive and conductive properties, and can provide a good elastic connection between the capacity providing layer 21 and the fast ion conductor layer 23. A mass ratio of the third conductive agent to the third binder ranges from 2.33 to 9. Specifically, content of the third binder in mass percentage in the conductive bonding layer 22 may be 10%, 12%, 15%, 20%, 22%, 25%, 28%, 30%, or the like. Content of the third conductive agent in mass percentage in the conductive bonding layer 22 may be 70%, 72%, 75%, 80%, 82%, 85%, 88%, 90%, or the like.

In an implementation of the present disclosure, the capacity providing layer 21 includes the following components in mass percentage: 60 wt% to 80 wt% of the first negative electrode active material, 10 wt% to 30 wt% of the first binder, and 1 wt% to 15 wt% of the first conductive agent. Specifically, content of the first negative electrode active material in mass percentage in the capacity providing layer 21 may be 60%, 62%, 65%, 70%, 75%, 78%, 80%, or the like. Content of the first binder in mass percentage in the capacity providing layer 21 may be 10%, 11%, 15%, 20%, 22%, 25%, 28%, 30%, or the like. Content of the first conductive agent in mass percentage in the capacity providing layer 21 may be 1%, 2%, 3%, 5%, 8%, 10%, 12%, 14%, 15%, or the like. In some implementations, a mass ratio of the first negative electrode active material, the first binder, and the first conductive agent is 6:3:1, 7:2:1, 8:1:1, or the like.

In some implementations of the present disclosure, a mass percentage of the first binder in the capacity providing layer 21 is greater than a mass percentage of the second binder in the fast ion conductor layer 23. This ensures a strong adhesion between the capacity providing layer 21 and the negative electrode current collector 10, so that even if other coatings peel off when the battery is subjected to misuse conditions such as compression, impact, or puncturing, the capacity providing layer 21 does not peel off from the surface of the negative electrode current collector 10, thereby avoiding direct contact between the negative electrode current collector 10 and the positive electrode, and lowering a risk of thermal runaway of the battery core.

For a selection range of the third binder and the first binder, refer to the foregoing description for the second binder of the present disclosure. For a selection range of the third conductive agent and the first conductive agent, refer to the foregoing description for the second conductive agent of the present disclosure. Details are not described herein again. It may be understood that the third binder or the first binder and the foregoing second binder may be of a same material or different materials, and the third conductive agent or the first conductive agent and the foregoing second conductive agent may be of a same material or different materials.

In the present disclosure, the specific capacity of the first negative electrode active material is greater than that of the carbon active material, and the first negative electrode active material may be selected from one or more of a silicon-based material, a tin-based material, a phosphorous-based material, or the like. In an implementation of the present disclosure, the first negative electrode active material is a silicon-based material. The silicon-based material is widely available and low in price, and has a much higher specific capacity than the carbon active material. Use of the silicon-based material in the negative electrode of the battery can increase the energy density of the battery and reduce the thickness of the electrode sheet. Specifically, the silicon-based material may include one or more of elemental silicon, silicon alloy, silicon oxide, and a silicon-carbon composite material. The silicon-carbon composite material may include silicon-containing material (for example, elemental silicon, silicon alloy, or silicon oxide) and carbon material. The silicon-containing material and the carbon material may be combined in a coating form (for example, the carbon material coating the silicon-containing material), and/or in a dispersed form. In some implementations, the first negative electrode active material is the silicon-carbon composite material. Compared with another silicon-based material, the silicon-carbon composite material has good conductivity, dynamic performance, and cycling performance. Further, in some embodiments, the silicon-carbon composite material contains silicon grains, and a size of the silicon grain is less than or equal to 5 nm. In this case, the silicon-carbon composite material exhibits a low volume expansion effect and good dynamic performance. The size of the silicon grain specifically refers to a diameter of the silicon grain.

In some implementations of the present disclosure, a coating layer is further provided on a surface of the first negative electrode active material. The presence of the coating layer may provide a buffer function for volume expansion of the first negative electrode active material during lithium de-intercalation, and may also isolate electrolyte from direct contact with the first negative electrode active material, to reduce occurrence of side reactions. When the coating layer is of a conductive material, the conductivity of the first negative electrode active material may further be improved.

The coating layer is usually of a material that does not react with the electrolyte and that is conductive. The coating layer includes one or more of graphene, polyaniline, polypyrrole, polydopamine, or the like, but is not limited thereto. In an implementation of the present disclosure, a thickness of the coating layer ranges from 50 nm to 150 nm. The coating layer of suitable thickness does not easily crack during battery cycling, and does not significantly reduce a specific capacity of the whole material (that is, the first negative electrode active material with the coating layer).

In the present disclosure, the negative electrode current collector 10 may include, but is not limited to, a copper foil, a copper alloy foil, a film material coated with metallic copper, the foregoing materials with a carbon-coated surface, or the like. The metallic copper may be elemental copper or copper alloy.

The negative electrode sheet provided in this embodiment of the present disclosure may be prepared by using the following method:

sequentially applying a first paste containing the first negative electrode active material, the first binder, and the first conductive agent on at least one side surface of the negative electrode current collector 10 and performing drying to form the capacity providing layer 21, applying a second paste containing the third binder and the third conductive agent and performing drying to form the conductive bonding layer 22, applying a third negative electrode paste containing the carbon active material, the lithium superionic conductor, the second binder, and the second conductive agent and performing drying to form the fast ion conductor layer 23, and carrying out pressing to obtain the negative electrode sheet, where the specific capacity of the first negative electrode active material is greater than that of the carbon active material.

Solvents contained in the first paste, the second paste, and the third paste may be the same or different, and may be independently selected from one or more of water, alcohol solvent (for example, ethanol), N-methylpyrrolidone (NMP), dimethylformamide (DMF), diethyl formamide (DEF), or the like. The content of the solvent is not specifically limited, provided that the solvent can meet fluidity and uniformity required for paste application. The pastes may be specifically applied in one or a combination of multiple manners including spin coating, brush coating, spray coating, dip coating, and blade coating. The pressing method may be specifically roll pressing.

The negative electrode current collector 10 may be coated on one side or both sides. In other words, a stacked structure of the capacity providing layer 21, the conductive bonding layer 22, and the fast ion conductor layer 23 may be formed on a side surface of the negative electrode current collector 10, or a stacked structure of the capacity providing layer 21, the conductive bonding layer 22, and the fast ion conductor layer 23 may be formed on each of two opposite side surfaces of the negative electrode current collector 10.

In addition, the second paste may be directly applied on the first paste, or may be applied on the capacity providing layer 21 formed by drying the first paste. The third paste is applied in a similar way. In some implementations, the first paste, the second paste, and the third paste are sequentially applied on a side surface of the negative electrode current collector 10, and then are dried together. If double-side coating is required, the foregoing operations may be repeated on the other side surface of the negative electrode current collector 10. In some other implementations, the first paste may be applied on a side surface of the negative electrode current collector 10 and dried to form the capacity providing layer 21, then the second paste is applied on the capacity providing layer 21 and dried to form the conductive bonding layer 22, and the third paste is applied on the conductive bonding layer 22 and dried to form the fast ion conductor layer 23. If double-side coating is required, the foregoing operations may be repeated on the other side surface of the negative electrode current collector 10.

A method for preparing the negative electrode sheet is simple, and the prepared negative electrode sheet has a novel and stable structure, and can achieve both high energy density and good fast-charging performance.

An embodiment of the present disclosure further provides a lithium battery. The lithium battery includes the negative electrode sheet according to embodiments of the present disclosure.

In an implementation of the present disclosure, the lithium battery further includes a positive electrode sheet, and a separator arranged between the negative electrode sheet and the positive electrode sheet.

The positive electrode sheet generally includes a positive electrode current collector and a positive electrode coating arranged on at least one side surface of the positive electrode current collector. The positive electrode coating generally contains a positive electrode active material, a conductive agent, and a binder. The positive electrode active material may include, but is not limited to, one or more of a single oxide of lithium (for example, lithium cobalt oxide, lithium manganese oxide, or lithium nickel oxide), a binary oxide of lithium (for example, lithium nickel manganese oxide or lithium nickel cobalt oxide), a ternary oxide of lithium (for example, lithium nickel cobalt manganese oxide or lithium nickel cobalt aluminum oxide), a multielement oxide of lithium, a lithium-rich manganese-based material, a lithium-containing phosphate (for example, lithium iron phosphate or lithium iron manganese phosphate), and the like. These positive electrode active materials may be undoped or doped modified, and a surface of these positive active materials may or may not be provided with a coating layer. Generally, phosphatebased active materials are usually provided with a coating layer.

The separator is configured to separate the positive electrode sheet from the negative electrode sheet, to ensure insulation and liquid retention between the positive electrode sheet and the negative electrode sheet. The separator, the positive electrode sheet, and the negative electrode sheet jointly form a battery core. The battery core is accommodated in a battery case and is infiltrated by an electrolyte contained in the case. In some implementations of the present disclosure, the lithium battery may be assembled by using the following method: sequentially stacking the positive electrode sheet, the separator, and the negative electrode sheet, to form a battery core, placing the battery core in a battery case, filling an electrolyte into the battery case, and then sealing the battery case, to obtain the battery. The battery core may be in a wound form or a stacked form.

The separator may use any separator material in the battery. For example, the separator may include, but is not limited to, a polymer separator, such as a single-layer polypropylene (PP) film, a single-layer polyethylene (PE) film, a double-layer PP/PE film, a double-layer PP/PP film, or a triple-layer PP/PE/PP film, a non-woven fabric, and the like. The electrolyte includes an electrolyte salt and an organic solvent. Specific types and compositions of the electrolyte salt and the organic solvent are both common choices in the battery field, and may be selected according to actual requirements.

An embodiment of the present disclosure further provides an electric device. The electric device is provided with the foregoing lithium battery according to embodiments of the present disclosure. The electric device may be an electric vehicle (for example, an automobile, a motorcycle, or a bicycle), an electric toy, a 3C product (for example, a mobile phone, a notebook computer, a tablet computer, a pen-input computer, an e-book player, or a wearable device), or the like. By using the battery, the electric device has a strong battery life and a fast charging speed.

The following further describes the technical solutions of the present disclosure with reference to multiple specific embodiments.

### Embodiment 1

A method for preparing a negative electrode sheet is provided and includes the following steps.
(1) A first paste used for forming a capacity providing layer is formulated. The first paste included water, and a first negative electrode active material (specifically, a silicon-carbon composite material having a surface with a polypyrrole coating layer approximately 70 nm thick (where in the silicon-carbon composite material used as a core, porous amorphous carbon and silicon are in a homogeneous distribution, silicon might be intercalated in pores of the porous amorphous carbon, and an outer layer is coated with polypyrrole), and a size of a silicon grain in the core is less than 5 nm), a binder (specifically, a modified polyacrylate, purchased from Fujian Blue Ocean & Black Stone New Materials Technology Co., Ltd., product number BA-290S3), and a conductive agent (specifically, a single-wall carbon nanotube) in a mass ratio of 6:3: 1.

A second paste used for forming a conductive bonding layer is formulated. The second paste included water, and a conductive agent (specifically, graphene) and a binder (specifically, the foregoing modified polyacrylate) in a mass ratio of 7:3.

A third paste used for forming a fast ion conductor layer is formulated. The third paste included water, and a carbon active material (specifically, hard carbon), and a lithium superionic conductor Li₃SBF₄, a binder (specifically, sodium carboxymethyl cellulose and styrene butadiene rubber), and a conductive agent (specifically, carbon black) in a mass ratio of 8:0.5:0.5:1.

(2) A copper foil is used as a negative electrode current collector. On a side surface of the copper foil, the first paste is sequentially applied and dried to form a capacity providing layer, the second paste is applied and dried to form a conductive bonding layer, and the third paste is applied and dried to form a fast ion conductor layer; then similarly, a capacity providing layer, a conductive bonding layer, and a fast ion conductor layer that are stacked are formed on the other side surface of the copper foil, to obtain a double-side electrode sheet; and finally, the double-side electrode sheet is roll-pressed to obtain a negative electrode sheet for further use. On each side surface of the negative electrode sheet, a thickness ratio of the fast ion conductor layer, the conductive bonding layer, the capacity providing layer is 3:1:6, and a total thickness is 60 µm.

### Production of a lithium battery:

(1) A positive electrode active material, that is, lithium nickel cobalt manganese oxide, a binder (specifically, polyvinylidene fluoride PVDF), and a conductive agent (specifically, carbon nanotube) are mixed in a solvent-N-methylpyrrolidone (NMP) in a mass ratio of 100:1.2:1 and fully stirred, to obtain a positive electrode paste. The positive electrode paste is applied on an aluminum foil that serves as a positive electrode current collector, and then baked, roll-pressed, and cut to obtain a positive electrode sheet.
(2) Battery assembly: In an argon-filled glove box, the negative electrode sheet, a separator, and the positive electrode sheet are sequentially stacked, to form a Z-shaped stacked battery core. The battery core is filled with an electrolyte and sealed in an aluminum-plastic film. After formation, capacity grading, and vacuum-sealing, a pouch battery is produced.

In addition, it should be noted that a pouch battery subsequently used in the present disclosure for testing a fast-charging capability of a battery is specifically of a three-electrode type, and a method for preparing the pouch battery includes: After the foregoing Z-shaped stacked battery core is obtained, a copper wire is used at a center of the battery core as a reference electrode, that is, a third electrode; and after the pouch battery is manufactured by using the foregoing method, lithium plating is carried out on the copper wire, to obtain a three-electrode battery using the lithium-plated copper wire as the reference electrode.

### Embodiment 2

A negative electrode sheet is provided and differs from that in Embodiment 1 in that: a thickness ratio of the fast ion conductor layer, the conductive bonding layer, and the capacity providing layer is 4:1:5; a mass ratio of graphene to modified polyacrylate in the conductive bonding layer is 9:1; and in the capacity providing layer, the first negative electrode active material is specifically a silicon-carbon composite material having a surface with a 60 nm thick polypyrrole coating layer, and a mass ratio of the first negative electrode active material, the binder, and the conductive agent is 8:1:1.

According to the method described in Embodiment 1, the negative electrode sheet in Embodiment 2 is assembled into a pouch battery.

### Embodiment 3

A negative electrode sheet is provided and differs from that in Embodiment 1 in that: a thickness ratio of the fast ion conductor layer, the conductive bonding layer, and the capacity providing layer is 5:1:4; in the fast ion conductor layer, a mass ratio of hard carbon, Li₃SBF₄, the binder, and the conductive agent is 7:1:1:1; and in the capacity providing layer, the first negative electrode active material is specifically the silicon-carbon composite material having a surface with a 50 nm thick graphene coating layer, and a mass ratio of the first negative electrode active material, the binder, and the conductive agent is 7:2:1.

According to the method described in Embodiment 1, the negative electrode sheet in Embodiment 3 is assembled into a pouch battery.

### Embodiment 4

A negative electrode sheet is provided and differs from that in Embodiment 1 in that: a thickness ratio of the fast ion conductor layer, the conductive bonding layer, and the capacity providing layer is 3:1:4, and on one side of the negative electrode current collector, a sum of the thicknesses of the fast ion conductor layer, the conductive bonding layer, and the capacity providing layer is 80 µm.

According to the method described in Embodiment 1, the negative electrode sheet in Embodiment 4 is assembled into a pouch battery.

### Embodiment 5

A negative electrode sheet is provided and differs from that in Embodiment 1 in that: on one side of the negative electrode current collector, a sum of the thicknesses of the fast ion conductor layer, the conductive bonding layer, and the capacity providing layer is 100 µm, and a thickness ratio of the fast ion conductor layer, the conductive bonding layer, and the capacity providing layer is still 3:1:6.

### Embodiment 6

A negative electrode sheet is provided and differs from that in Embodiment 1 in that: on one side of the negative electrode current collector, a sum of the thicknesses of the fast ion conductor layer, the conductive bonding layer, and the capacity providing layer is 120 µm, and a thickness ratio of the fast ion conductor layer, the conductive bonding layer, and the capacity providing layer is still 3:1:6.

According to the method described in Embodiment 1, the negative electrode sheet in Embodiment 6 is assembled into a pouch battery.

### Embodiment 7

A negative electrode sheet is provided and differs from that in Embodiment 1 in that: on one side of the negative electrode current collector, a thickness ratio of the fast ion conductor layer, the conductive bonding layer, and the capacity providing layer is 2:1:7, but a sum of the thicknesses of the fast ion conductor layer, the conductive bonding layer, and the capacity providing layer is still 60 µm.

According to the method described in Embodiment 1, the negative electrode sheet in Embodiment 7 is assembled into a pouch battery.

### Embodiment 8

A negative electrode sheet is provided and differs from that in Embodiment 1 in that a surface of a silicon-carbon composite material in a capacity providing layer is not provided with a coating layer.

According to the method described in Embodiment 1, the negative electrode sheet in Embodiment 8 is assembled into a pouch battery.

To highlight beneficial effects of the present disclosure, the following Comparative examples 1 to 4 are further provided in the present disclosure.

### Comparative example 1

A negative electrode sheet is provided and differs from that in Embodiment 1 in that: only one single layer of negative electrode coating is formed on a side surface of the copper foil, and the negative electrode coating includes only the negative electrode active material, that is, artificial graphite, the binder, and the conductive agent in a mass ratio of 8:1:1. A thickness of the negative electrode sheet in Comparative example 1 is 60 µm.

According to the method described in Embodiment 1, the negative electrode sheet in Comparative example 1 is assembled into a pouch battery.

### Comparative example 2

A negative electrode sheet is provided and differs from that in Embodiment 1 in that: only one single layer of negative electrode coating is formed on a side surface of the copper foil, and a composition of the negative electrode coating is the same as that of the capacity providing layer in Embodiment 1. A thickness of the negative electrode sheet in Comparative example 2 is 60 µm.

According to the method described in Embodiment 1, the negative electrode sheet in Comparative example 2 is assembled into a pouch battery.

### Comparative example 3

A negative electrode sheet is provided and mainly differs from that in Embodiment 1 in that: only one single layer of negative electrode coating is formed on a side surface of the copper foil, and a composition of the negative electrode coating is the same as that of the fast ion conductor layer in Embodiment 1. In addition, a thickness of the negative electrode sheet of Comparative example 3 is 60 µm.

### Comparative example 4

A negative electrode sheet is provided and mainly differs from that in Embodiment 1 in that no conductive bonding layer is arranged between the capacity providing layer and the fast ion conductor layer. On a side surface of the negative electrode sheet in Comparative example 4, a thickness ratio of the fast ion conductor layer to the capacity providing layer is 3:7, and a total thickness of the fast ion conductor layer and the capacity providing layer is 60 µm.

To strongly support the beneficial effects brought about by the technical solutions of the present disclosure, the following performance tests are respectively performed on the pouch batteries in the foregoing embodiments or comparative examples:
a. Test of fast-charging capability at room temperature:
   (1) At room temperature (for example, 25°C), the three-electrode batteries in the embodiments or the comparative examples are separately connected to a test cabinet produced by LAND Electronic Co., Ltd, and a three-channel Agilent data collection instrument is used to separately collect voltage between a positive electrode and a negative electrode, between the positive electrode and a third electrode, and between the negative electrode and the third electrode.
   (2) The battery is charged at a constant current with a rate of 0.5 C to an upper voltage limit of 4.2 V, then left to rest for 1 h, discharged at a constant current with a rate of 1/3 C to a lower voltage limit, and then left to rest for 1 h.
   (3) The battery is charged at a constant current with a rate of 1 C to an upper limit voltage of 4.2 V, then left to rest for 1 h, discharged at a constant current with a rate of 1/3 C to a lower limit voltage, and then left to rest for 1 h.
   (4) The battery is charged at a constant current with a rate of 1.5 C to an upper limit voltage of 4.2 V, then left to rest for 1 h, discharged at a constant current with a rate of 1/3 C to a lower limit voltage, and then left to rest for 1 h.
   (5) The battery is charged at a constant current with a rate of 2 C to an upper limit voltage of 4.2 V, then left to rest for 1 h, discharged at a constant current with a rate of 1/3 C to a lower limit voltage, and then left to rest for 1 h.
   (6) The battery is charged at a constant current with a rate of 3 C to an upper limit voltage of 4.2 V, then left to rest for 1 h, discharged at a constant current with a rate of 1/3 C to a lower limit voltage, and then left to rest for 1 h.
   (7) An SOC of the battery when the potential of the negative electrode relative to the third electrode reaches 0 mV at each charging rate is acquired, a charging time required for the negative electrode sheet at each charging rate is calculated, and the charging times is accumulated to obtain a total charging time required for the SOC to increase from 10% to an 80%.
b. Test of fast-charging capability at a low temperature of -10°C:
   A test is carried out in a temperature box at -10°C following the same testing steps as the test of the fast-charging capability at room temperature, at a maximum charging current with a rate of 2 C.
c. Test of fast-charging cycle at room temperature (25°C):
   A charging and discharging cycle test is carried out on each pouch battery (without a reference electrode) in the embodiments or the comparative examples at 25°C. A voltage range is 2.75 V to 4.2 V. A cycling strategy is as follows: stepwise charging: first charging at 3 C to 3.8 V, then charging at 2 C to 4.0 V, next charging at 1 C to 4.1 V, and finally charging at 0.5 C to 4.2 V; and for discharging, discharging at 1 C to 2.75 V. The charging and discharging process is repeated for a certain number of cycles, a cycling curve of each battery is recorded, and a capacity retention rate of each battery after 700 cycles is calculated.
d. Test of battery energy density:
   A calculation formula for battery energy density is as follows: battery energy density=battery capacity (C0)*discharging average voltage (V)/battery mass (M).

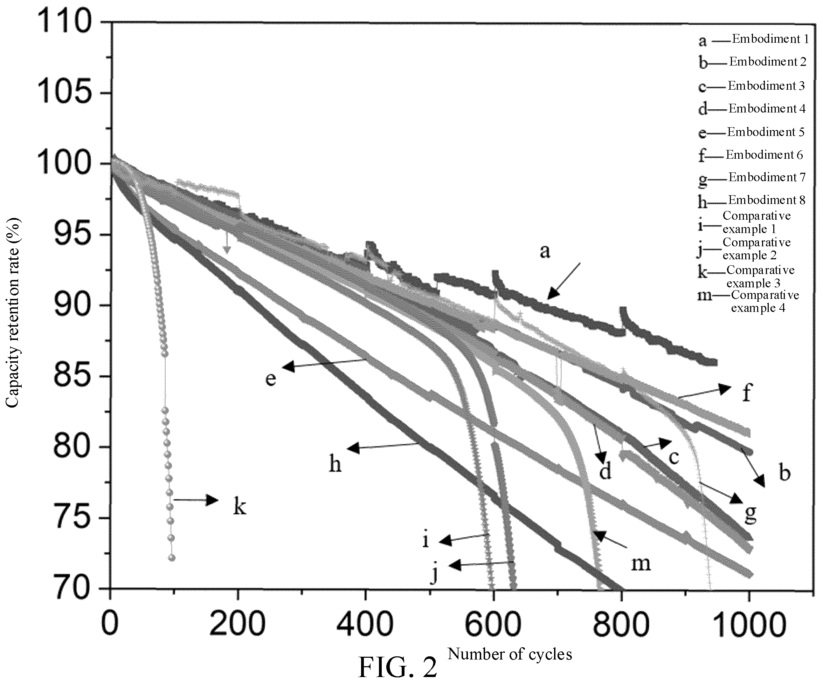

A testing method for a battery capacity (C0) and a discharging average voltage (V) is as follows: The battery is charged at 25°C with a constant current and a constant voltage of 0.33 C to 4.2 V, with a cutoff current of 0.05 C, left to rest for 10 min, and discharged at 0.33 C to 2.5 V, and the discharging capacity is recorded as C0 and the discharging average voltage as V. Relevant test results are summarized in the following Table 1. A graph of fast-charging cycling performance of the pouch batteries in some examples are shown in FIG. 2.

**Table 1**

| | Fast charging at room temperature: charging time (min) for SOC to increase from 10% to 80% | Fast charging at low temperature: charging time (min) for SOC to increase from 10% to 80% | Capacity retention rate (%) after 700 fast-charging cycles at room temperature | Battery energy density (Wh/kg) |
|---|---|---|---|---|
| Embodiment 1 | 24 | 35 | 89.5 | 290 |
| Embodiment 2 | 28 | 45 | 86.7 | 280 |
| Embodiment 3 | 26 | 38 | 83.9 | 280 |
| Embodiment 4 | 25 | 37 | 83.7 | 275 |
| Embodiment 5 | 30 | 47 | 82.2 | 300 |
| Embodiment 6 | 32 | 48 | 78.4 | 320 |
| Embodiment 7 | 26 | 40 | 87.4 | 310 |
| Embodiment 8 | 28 | 38 | 73.2 | 290 |
| Comparative example 1 | 40 | 55 | / (Unable to withstand 700 cycles) | 250 |
| Comparative example 2 | 38 | 50 | 11.14 | 300 |
| Comparative example 3 | 30 | 38 | / (Unable to withstand 700 cycles) | 200 |
| Comparative example 4 | 28 | 40 | 83.5 | 300 |

It may be learned from Table 1 that, compared with Comparative example 1 in which only graphite is used for the negative electrode and layered coating is not performed, the batteries in Embodiments 1 to 8 of the present disclosure are notably improved in fast-charging capability, cycling performance, energy density, and the like; and compared with Comparative example 2 in which a single-layer negative electrode coating with a silicon-carbon composite material as a negative electrode active material is used, the batteries in Embodiments 1 to 8 of the present disclosure are significantly improved in fast-charging capability and cycling performance without causing a noticeable decrease in the energy density of the batteries. The batteries in Embodiments 1 to 8 of the present disclosure have higher energy density, compared with Comparative example 3 in which only a single-layer negative electrode coating having the same formula as the fast ion conductor layer in the present disclosure. In addition, compared with Embodiment 1, the battery in Comparative example 4 without a conductive bonding layer has a higher capacity retention rate after 700 cycles. However, at about the 900^{th} cycle, the capacity retention rate of the battery begins to drop sharply. This may be due to the absence of the conductive bonding layer. Without the layer, an interface between the capacity providing layer and the fast ion conductor layer develops cracks as the cycles progress. These cracks lead to poor bonding, disrupting pathways for ions and electrons.

In another respect, it may be learned from a comparison between Embodiments 1 and 5 and Embodiment 6 that the battery has a good fast-charging capability and high cycling performance when a sum of the thicknesses of the fast ion conductor layer, the conductive bonding layer, and the capacity providing layer is within a preferred range from 60 µm to 100 µm. It may be learned from a comparison between Embodiment 1 and Embodiment 7 that, when a thickness ratio of the fast ion conductor layer, the conductive bonding layer, and the capacity providing layer falls within a preferred range (3-5):1:(4-6), the battery has a good fast-charging capability and high cycling performance, and a long-term cycling curve is less likely to show a "sharp drop". It may be learned from a comparison between Embodiment 1 and Embodiment 8 that the battery has better cycling performance when a conductive coating layer of appropriate thickness is provided on a surface of the silicon-carbon composite material in the capacity providing layer of the battery.

The foregoing embodiments show only several implementations of the present disclosure. Description of the embodiments are described in detail and specifically, but not to be construed as a limitation to the patent scope of the present disclosure. For a person of ordinary skill in the art, several transformations and improvements may be made without departing from the idea of the present disclosure. These transformations and improvements shall fall within the protection scope of the present disclosure. Therefore, the protection scope of the patent of the present disclosure shall be subject to the appended claims.

## Claims

1. A negative electrode sheet (100), comprising:
a negative electrode current collector (10);
a capacity providing layer (21), stacked on at least one side surface of the negative electrode current collector (10) in a thickness direction (Z), and comprising a first negative electrode active material, a first binder, and a first conductive agent;
a fast ion conductor layer (23), stacked on a side surface of the capacity providing layer (21) facing away from the negative electrode current collector (10), and comprising a carbon active material, a lithium superionic conductor, a second binder, and a second conductive agent, a specific capacity of the first negative electrode active material being greater than a specific capacity of the carbon active material; and
a conductive bonding layer (22), arranged between the capacity providing layer (21) and the fast ion conductor layer (23).

2. The negative electrode sheet (100) according to claim 1, wherein in the thickness direction (Z) of the negative electrode current collector (10), a thickness ratio of the fast ion conductor layer (23), the conductive bonding layer (22), and the capacity providing layer (21) is (3-5):1:(4-6).

3. The negative electrode sheet (100) according to claim 2, wherein on one side of the negative electrode current collector (10), a sum of thicknesses of the capacity providing layer (21), the conductive bonding layer (22), and the fast ion conductor layer (23) ranges from 60 µm to 100 µm.

4. The negative electrode sheet (100) according to claim 2 or 3, wherein the thickness of the capacity providing layer (21) is greater than or equal to the thickness of the fast ion conductor layer (23).

5. The negative electrode sheet (100) according to any one of claims 1 to 4, wherein the fast ion conductor layer (23) comprises the following components in mass percentage: 70 wt% to 89 wt% of the carbon active material, 4 wt% to 10 wt% of the lithium superionic conductor, 5 wt% to 10 wt% of the second binder, and 6 wt% to 10 wt% of the second conductive agent.

6. The negative electrode sheet (100) according to any one of claims 1 to 5, wherein the conductive bonding layer (22) comprises a third binder with a mass percentage of 10 wt% to 30 wt% and a third conductive agent with a mass percentage of 70 wt% to 90 wt%.

7. The negative electrode sheet (100) according to any one of claims 1 to 6, wherein the capacity providing layer (21) comprises the following components in mass percentage: 60 wt% to 80 wt% of the first negative electrode active material, 10 wt% to 30 wt% of the first binder, and 1 wt% to 15 wt% of the first conductive agent.

8. The negative electrode sheet (100) according to any one of claims 1 to 7, wherein a mass percentage of the first binder in the capacity providing layer (21) is greater than or equal to a mass percentage of the second binder in the fast ion conductor layer (23).

9. The negative electrode sheet (100) according to any one of claims 1 to 8, wherein the carbon active material comprises one or more of hard carbon, soft carbon, graphite, and mesophase carbon microbead; and the first conductive agent and the second conductive agent are independently selected from one or more of carbon nanotube, graphene, carbon fiber, and carbon black.

10. The negative electrode sheet (100) according to any one of claims 1 to 9, wherein the first negative electrode active material is a silicon-based material, and the silicon-based material comprises one or more of elemental silicon, silicon alloy, silicon oxide, and a silicon-carbon composite material.

11. The negative electrode sheet (100) according to claim 10, wherein a surface of the first negative electrode active material further comprises a coating layer.

12. The negative electrode sheet (100) according to claim 11, wherein the coating layer comprises one or more of graphene, polyaniline, polypyrrole, and polydopamine.

13. The negative electrode sheet (100) according to claim 11 or 12, wherein a thickness of the coating layer ranges from 50 nm to 150 nm.

14. The negative electrode sheet (100) according to claim 10 or 11, wherein the first negative electrode active material is a silicon-carbon composite material, the silicon-carbon composite material comprises silicon grains, and a size of the silicon grain is less than or equal to 5 nm.

15. A lithium battery, comprising the negative electrode sheet (100) according to any one of claims 1 to 14.

16. An electric device, comprising the lithium battery according to claim 15.
